# EUROPÄISCHE PATENTSCHRIFT

(11) **EP 0 976 971 B1**
(45) Veröffentlichungstag und Bekanntmachung des Hinweises auf die Patenterteilung: **18.10.2006**
(21) Anmeldenummer: 99112988.3
(22) Anmeldetag: 06.07.1999
(51) Int. Cl.: F21V 5/04

(54) **Licht emittierende Einrichtung, insbesondere Leuchte oder Laterne**
Light emitting device, in particular lamp or lantern
Dispositif pour l'émission de lumière, notamment lampe ou lanterne

(30) Priorität: 31.07.1998 DE 19834520
(43) Veröffentlichungstag der Anmeldung: 02.02.2000
(73) Patentinhaber: aqua signal Aktiengesellschaft, 28307 Bremen (DE)
(72) Erfinder: Rohlfing, Ralph, 28844 Weyhe (DE)
(74) Vertreter: Heiland, Karsten

(56) Entgegenhaltungen:
- DE-A- 19 615 965
- GB-A- 757 338
- US-A- 4 104 615
- US-A- 5 769 532

## Beschreibung

Die Erfindung betrifft eine Licht emittierende Einrichtung, insbesondere Leuchte oder Laterne, mit einem Gehäuse, mindestens einer Lichtquelle und mindestens einer Optik zum Führen des von der Lichtquelle abgestrahlten Lichts, wobei die Optik eine ringförmig oder zumindest teilringförmig umlaufende Lichtaustrittsfläche aufweist und das Licht aus der Optik als schmaler, d. h. in der Höhe begrenzter Streifen umlaufend austritt.

Signal- oder Markierungsleuchten sollen weißes oder farbiges Licht vorzugsweise in einer bestimmten Richtung abstrahlen. Hierzu werden Blenden oder auch Optiken verwendet. Im Schifffahrtswesen, auf Schiffen und Booten oder an Land, dienen beispielsweise Laternen der Kenntlichmachung bestimmter Zustände, Fahrtrichtungen, geografischer Besonderheiten und dergleichen mehr. Als Lichtquellen werden herkömmliche Glühlampen, Halogenlampen und ähnlich leistungsstarke Lampen verwendet.

Aus der gattungsbildenden US 5,769,532 ist eine Signalleuchte bekannt, bei der Licht aus LED's in eine Optik eingestrahlt und von dieser so umgelenkt wird, dass das Licht ringförmig abgestrahlt wird. Eine präzise Justierung der LED's relativ zur Optik ist nicht vorgesehen.

In der US 4,104,615 ist eine drehbare Signalleuchte gezeigt, bei der Licht aus einer Lichtquelle axial in eine Optik eintritt und radial umlaufend aus der Optik wieder austritt.

Aufgabe der vorliegenden Erfindung ist es, eine Einrichtung der Eingangs genannten Art zu schaffen, die auch mit Leuchtmitteln geringerer Stärke Licht in der erforderlichen Richtung und Intensität abgibt und bei der Lichtquelle und Optik zueinander einstellbar sind.

Zur Lösung der Aufgabe ist die erfindungsgemäße Einrichtung dadurch gekennzeichnet, dass der Abstand zwischen Lichtquelle und Optik veränderbar ist und dass Lichtquelle und Optik unterschiedlichen, gegeneinander in gemeinsamer axialer Richtung verstellbaren Hülsen (Außenhülse, mittlere Hülse) zugeordnet sind.

Vorteilhafterweise wird das Licht durch die Optik so gesammelt, gebrochen und geführt, dass das gesamte in die Optik eintretende Licht aus der zumindest teilringförmigen Lichtaustrittsfläche nahezu vollständig wieder austritt.

Bei der Optik handelt es sich vorteilhafterweise um eine rotationssymmetrische, katadioptrische Linse mit einer einzigen Zone. In diese tritt das Licht in etwa axialer Richtung ein und in etwa radialer Richtung wieder aus.

Vorzugsweise sind die aus der Lichtaustrittsfläche austretenden Lichtstrahlen zueinander nahezu parallel gerichtet und insbesondere gleichphasig. Hierzu ist die Optik so konstruiert, daß die sogenannte Eikonalbedingung (gleiche optische Weglängen der Lichtstrahlen) erfüllt ist.

Besonders günstig ist eine punktförmige Lichtquelle, aus der das Licht mit einem bestimmten Kegel austreten kann. Die Lichtquelle ist axial vor der Linse angeordnet und zwar noch vor einer die Linse geometrisch begrenzenden Eintrittsebene.

Vorteilhafterweise ist als Lichtquelle eine einzelne LED vorgesehen. Anstelle dieser können eine Glasfaser oder ein Glasfaserbündel vorgesehen sein, die aus einer oder mehreren LED oder anderen Lichtquellen gespeist sind.

Zur Steigerung der Lichtintensität der Einrichtung insgesamt können auch mehrere Lichtquellen und Optiken miteinander gekoppelt werden. Bei Anordnung einer Lichtquelle in einem Gehäuse mit oben auf dem Gehäuse angeordneter Optik kann beispielsweise auf dieser Optik eine weitere Optik mit Gehäuse in umgekehrter Anordnung vorgesehen sein. Die Strahlführungen der Optiken sind dann vorzugsweise so berechnet, daß die Lichtstrahlen einander im Unendlichen oder in der angepeilten Maximalentfernung schneiden, beispielsweise in einer Entfernung von zwei bis vier Seemeilen.

Weitere Merkmale der Erfindung sind der Beschreibung im übrigen und den Ansprüchen zu entnehmen. Ausführungsbeispiele werden nachfolgend an Hand von Zeichnungen näher erläutert. Es zeigen:
- Fig. 1: eine Querschnittsdarstellung einer erfindungsgemäßen Laterne,
- Fig. 2: eine Explosionsdarstellung der Laterne gem. Fig. 1,
- Fig. 3: eine Skizze zur Erläuterung der optischen Strahlführung,
- Fig. 4: eine Querschnittsdarstellung einer erfindungsgemäßen Laterne mit zwei Lichtquellen,
- Fig. 5: ein Glasfasersystem zur Weiterleitung von Licht aus mehreren punktförmigen Lichtquellen bishin zu einem gemeinsamen nahezu punktförmigen Lichtaustritt.

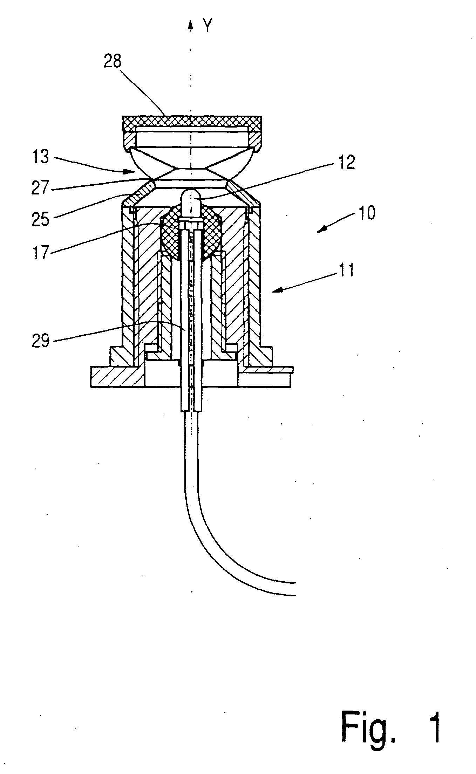

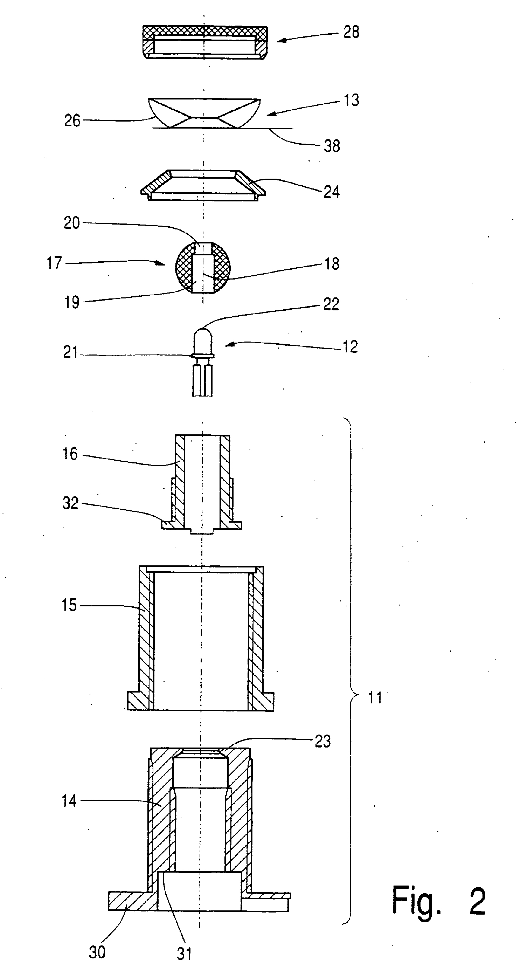

Es wird zunächst Bezug genommen auf die Figuren 1 und 2. Eine Laterne 10 weist ein Gehäuse 11, eine nahezu punktförmige Lichtquelle 12 und eine Optik 13 auf. Das Gehäuse weist je eine Halteeinrichtung für die Optik 13 und die Lichtquelle 12 auf, wobei die Halteeinrichtungen relativ zueinander bewegbar und justierbar sind. Konkret ist das Gehäuse röhren- oder hülsenförmig mit einer mittleren Hülse 14 einer Außenhülse 15 und einer Innenhülse 16. Diese sind ineinandergesetzt angeordnet und jeweils an beiden Enden offen. Einem Ende zugeordnet ist die Lichtquelle 12. Diese ist als einzelne LED ausgeführt und in einer Aufnahme 17 beweglich und arretierbar gelagert. In axialer Richtung vor der Aufnahme 17 ist die Optik 13 angeordnet. In diese tritt das Licht von der Lichtquelle 12 kommend in axialer Richtung bzw. mit einem bestimmten Eintrittskegel ein und tritt in radialer Richtung wieder aus.

Die Aufnahme 17 ist als Kugel mit einer mittigen durchgehenden Bohrung 18 ausgebildet, in der die Lichtquelle 12 sitzt. Eine Abstrahlung des Lichts ist möglich in axialer Richtung und mit einem Kegel von vorzugsweise etwa 90° Grad, maximal 120° Grad. Die Bohrung 18 ist gestuft ausgebildet mit einem Abschnitt 19 breiteren Durchmessers und einem kurzen Abschnitt 20 mit geringerem Durchmesser. Die Lichtquelle 20 (eine Fassung oder ein Gehäuse) weist ebenfalls unterschiedliche Durchmesser auf und kommt mit einem entsprechenden Absatz 21 am Übergang zwischen den Abschnitten 19 und 20 zu liegen. Eine gewölbte Lichtaustrittsfläche 22 der Lichtquelle 12 ragt aus der kugelförmigen Aufnahme 17 hervor.

Die Aufnahme 17 ist zwischen der Innenhülse 16 und der mittleren Hülse 14, im Endbereich derselben, klemmend gehalten. Hierzu weist die mittlere Hülse 14 an einem Endbereich eine Querschnittsverjüngung 23 auf, die enger ist als der Durchmesser der Aufnahme 17. Letztere liegt innen an der Querschnittesverjüngung 23 an und weist eine sphärische Oberfläche auf. Die Innenhülse 16 kommt der Querschnittsverjüngung 23 gegenüberliegend an der Aufnahme 17 zur Anlage. Gehalten ist die Innenhülse 16 in der mittleren Hülse 14 durch eine entsprechende Gewindepaarung. Die Innenhülse 16 ist somit in die Hülse 14 einschraubbar. Dadurch kann die Position der Aufnahme 17 gelockert und insbesondere durch Drehen oder Verschwenken derselben geändert werden.

Die Außenhülse 15 ist mit einem Käfig bzw. einer kegelförmigen Einfassung 24 versehen. Mittlere Hülse 14 und Außenhülse 15 sind wiederum durch eine geeignete Gewindepaarung miteinander verbunden. Durch einfaches Verdrehen der beiden Hülsen ist eine axiale Verstellung der Einfassung 24 relativ zur mittleren Hülse 14 und damit zur Lichtquelle 12 möglich. Einfassung 24 und Lichtquelle 12 sind am selben Endbereich der Hülsen angeordnet.

Die Einfassung 24 ist mit der Außenhülse 15 verbunden, etwa durch Klebung oder ein Gewinde. In axialer Richtung außen auf der Einfassung 24 ist die Optik 13, nämlich eine katadioptrische Linse angeordnet. Diese kann in beliebiger Weise auf der Einfassung 24 gehalten sein, etwa wiederum durch Klebung. Die Größe der Einfassung 24 ist auf die geometrische Form der Optik 13 abgestimmt. Zwischen einer sich verjüngenden Kegelfläche 25 der Einfassung 24 und einer umlaufenden Lichtaustrittsfläche 26 der Optik 13 ist eine umlaufende Einschnürung 27 gebildet.

Der Lichtquelle 12 gegenüberliegend ist die Optik 13 mit einer Abdeckung 28 versehen. Diese verhindert einen Lichtaustritt aus der Optik in axialer Richtung. Die Abdeckung 28 kann wiederum in beliebiger Weise mit der Optik verbunden sein, etwa durch Klebung. Auch kann eine nicht gezeigte Halterung die Abdeckung 28, die Optik 13, die Einfassung 24 und das Gehäuse 11 im übrigen zusammenhalten.

Die Hülsenform der Bauelemente 14, 15 und 16 ist besonders vorteilhaft, weil elektrische Zuleitungen 29 für die Lichtquelle 12 in ihnen in axialer Richtung geführt werden können. Die mittlere Hülse 14 weist an ihrem der Querschnittsverjüngung 23 gegenüberliegenden Ende einen außen umlaufenden Absatz oder Steg 30 auf. Auf diesem stützt sich die äußere Hülse 15 mit einem korrespondierenden Endbereich ab. Zugleich ist innenseitig des Steges 30 ein Absatz 31 vorgesehen, an dem ein außenumlaufender Steg 32 der Innenhülse 16 bestenfalls zur Anlage kommen kann.

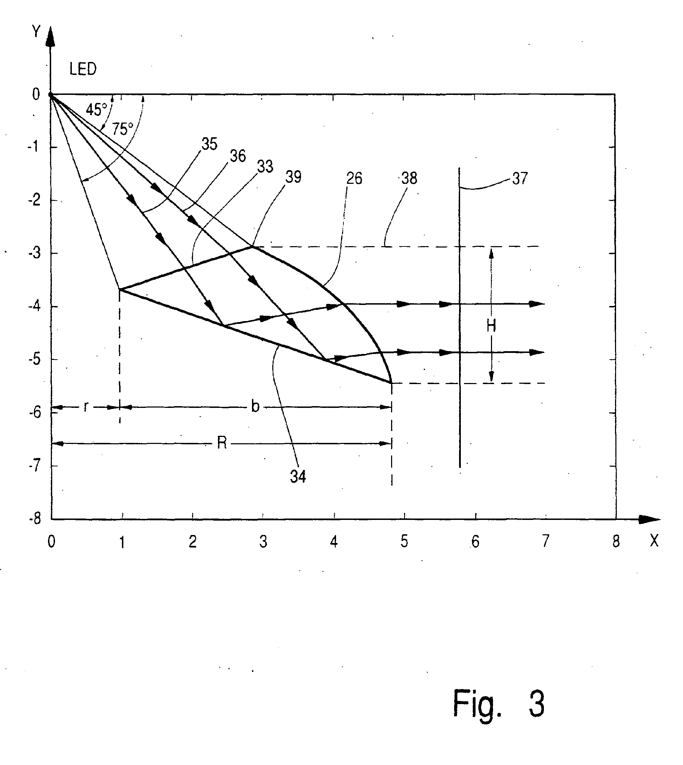

Fig. 3 verdeutlicht die Lichtführung innerhalb der Optik 13. Dargestellt ist nur ein axialer Querschnitt durch die ringförmige Linse der Optik 13. Die vollständige Form der Linse ist erstellbar durch Rotation des Querschnitts um die Y-Achse.

Es wird angenommen, daß eine LED (die Lichtquelle 12) im Nullpunkt der Skala angeordnet ist. Das Licht wird in einem Kegel von 90° Grad nach unten abgestrahlt (genau umgekehrt gegenüber der Darstellung in Fig. 1). Der in der Fig. 3 dargestellte Linsenabschnitt kann auch als Prismenelement bezeichnet werden, mit einer Lichteintrittsfläche 33, einer Reflektionsfläche 34 und der Lichtaustrittsfläche 26. Die Lichteintrittsfläche 33 nimmt Licht über einen Winkelbereich von 45° bis 70° Grad auf, bezogen auf die Gesamtlinse entspricht dies einer Lichtaufnahme in einem kegelförmigen Bereich zwischen 30° und 90° Grad. Realistische Größenangaben können folgende sein:

| | |
|---|---|
| Linsenhöhe H | 8 mm |
| Außenradius R | 15,2084 mm |
| Innenradius r | 3,1081 mm |
| Differenz R - r = b | 12,1004 mm |

(durch Rundungsfehler können rechnerische Unstimmigkeiten auftreten.)

Die Winkelstellungen der ebenen Lichteintrittsfläche 33 und der ebenen Reflektionsfläche 34 sowie die konvexe Krümmung der Lichtaustrittsfläche 26 sind so gewählt, daß die sogenannte Eikonalbedingung erfüllt ist. Die Lichtstrahlen sollen nach Verlassen der Linse bezogen auf eine Referenzebene hinter der Linse alle die gleichen optischen Wege zurückgelegt haben und somit in Phase sein. Als optische Weglänge bezeichnet man dabei das Produkt aus Brechungsindex und geometrischer Weglänge. Der Brechungsindex ist naturgemäß vom Werkstoff der Linse abhängig. Diese kann aus Glas, Preßglas, Kunststoff oder anderen durchsichtigen und mit der erforderlichen Genauigkeit formbaren Werkstoffen hergestellt sein. Ein geeignetes Material für die Linse ist beispielsweise Polykarbonat. In Fig. 3 sind zwei Lichtstrahlen 35 und 36 eingezeichnet. Diese sollen gleiche optische Wege bis zum Auftreffen auf eine vertikale Referenzebene 37 zurücklegen. Wichtig ist dabei auch, daß an der Reflektionsfläche 34 eine Totalreflektion erfolgt.

Die in Fig. 3 an der vertikalen Y-Achse und der waagerechten X-Achse angegebenen Ziffern sind dimensionslos und geben lediglich Größenverhältnisse wieder. Die Lichteintrittsfläche 33 ist gegenüber der X-Achse geneigt und zwar zur Linsenmitte hin (Y-Achse) mit zunehmendem Abstand zur Waagerechten durch den Nullpunkt (LED).

Für die praktische Ausführung von Bedeutung ist noch eine sogenannte Eintrittsebene 38. Diese liegt genau in der Ebene einer umlaufenden Kante 39, am Übergang zwischen der Lichteintrittsfläche 33 und der Lichtaustrittsfläche 26. Die Einfassung 24 kommt im Bereich der Eintrittsebene 38 an der Optik 13 bzw. der Linse zu liegen. Die Lichtquelle 12 ist bezogen auf die Optik 13 außerhalb der Eintrittsebene 38 und mit geringem Abstand vor dieser angeordnet. Der genaue Abstand ergibt sich durch den vorhandenen Abstrahlwinkel des Lichts.

Mit der beschriebenen Laterne kann aus einer einzelnen LED ein schmaler umlaufender Lichtstreifen erzeugt werden, der noch aus großer Entfernung sichtbar ist. Dies wird ermöglicht durch die zielgerichtete Umlenkung und Parallelisierung der Lichtstrahlen, insbesondere unter Einhaltung der Eikonalbedingung. Vorzugsweise beträgt die Aufnahmeapertur zwei Pi. Entsprechend dem parallelen Strahlenverlauf nach Austritt aus der Linse beträgt die Abstrahlungsapertur 0.

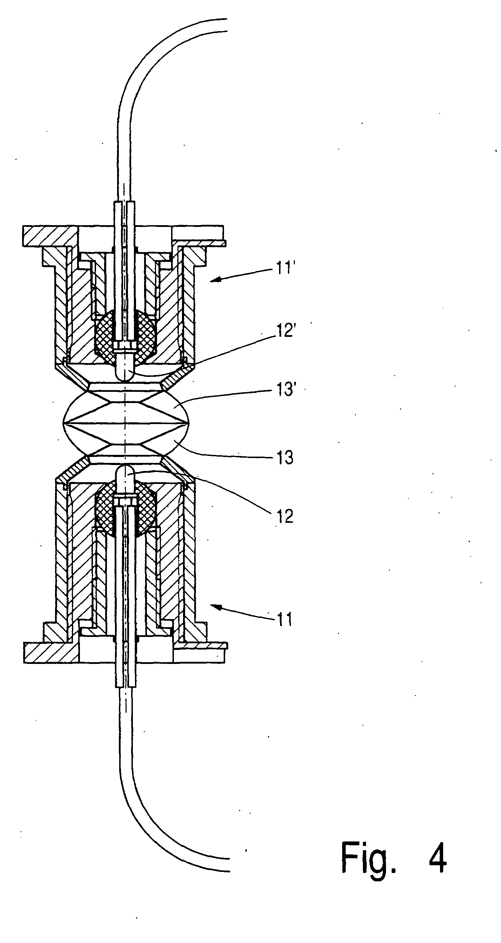

Fig. 4 zeigt eine besondere Ausführungsform mit zwei gegeneinander gekehrten Optiken 13, 13 und entsprechend gegenüberliegend angeordneten Lichtquellen 12, 12' und Gehäusen 11, 11'. Die Abdeckung 28 kann entfallen. Geeignete Verbindungselemente sind nicht gezeigt. Durch die beschriebene Kopplung zweier Laternenelemente ergibt sich insgesamt eine Laterne mit verdoppelter Lichtaustrittsfläche und doppelter Lichtintensität.

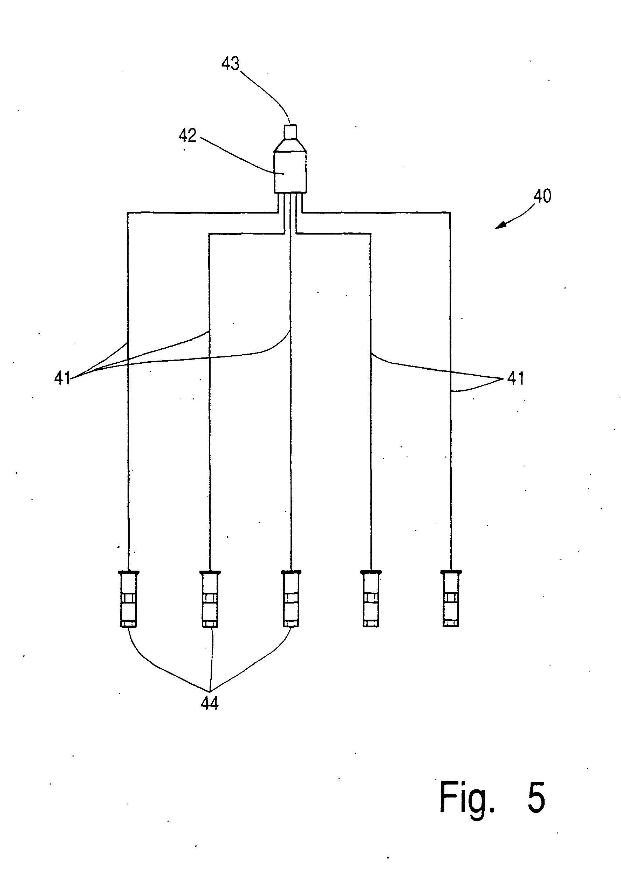

Die als Lichtquelle 12 vorgesehene LED kann ersetzt werden durch jede andere nahezu punktförmige Lichtquelle mit dem geeigneten Abstrahlwinkel. Gem. Fig. 5 kann beispielsweise ein Glasfasersystem 40 vorgesehen sein. Dieses weist einzelne Glasfasern 41 oder Glasfaserstränge auf, deren Enden in einer gemeinsamen Endhülse 42 zusammengefaßt sind. Diese weist eine Lichtaustrittsfläche 43 auf, die als punktförmige Lichtquelle wirkt. An den jeweils anderen Enden der Glasfasern 41 sind ebenfalls Endhülsen 44 angeordnet. Diese nehmen Licht aus geeigneten Lichtquellen auf, etwa aus besonders geschützt angeordneten mehreren LED. Mit Hilfe des Glasfasersystems 40 ist die Einspeisung einer wesentlich höheren Lichtleistung in die Laterne 10 möglich. Anstelle der elektrischen Leitungen 29 sind dann die Glasfasern 41 durch die Hülsen 14, 15 und 16 geführt.

## Patentansprüche

1. Licht emittierende Einrichtung, insbesondere Leuchte oder Laterne (10), mit einem Gehäuse (11) mindestens einer Lichtquelle (12) und mindestens einer Optik (13) zum Führen des von der Lichtquelle abgestrahlten Lichts, wobei die Optik (13) eine ringförmig oder zumindest teilringförmig umlaufende Lichtaustrittsfläche (26) aufweist und das Licht aus der Optik (13) als schmaler, d. h. in der Höhe begrenzter Streifen umlaufend austritt **dadurch gekennzeichnet, dass** der Abstand zwischen Lichtquelle (12) und Optik (13) veränderbar ist und dass Lichtquelle (12) und Optik (13) unterschiedlichen, gegeneinander in gemeinsamer axialer Richtung verstellbaren Hülsen (15, 14) zugeordnet sind.

2. Einrichtung nach Anspruch 1, **dadurch gekennzeichnet, daß** die Optik (13) eine katadioptrische Linse ist, insbesondere mit einer einzigen, eine Lichteintrittsfläche (33), eine Reflektionsfläche (34) und eine Lichtaustrittsfläche (26) aufweisenden Zone.

3. Einrichtung nach mindestens einem der voranstehenden Ansprüche, **dadurch gekennzeichnet, daß** die die Optik (13) passierenden Lichtstrahlen (35, 36) der Eikonalbedingung genügen.

4. Einrichtung nach mindestens einem der voranstehenden Ansprüche, **dadurch gekennzeichnet, daß** die Lichtquelle (12) mindestens eine LED ist.

5. Einrichtung nach mindestens einem der voranstehenden Ansprüche, **dadurch gekennzeichnet, daß** die Lichtquelle (12) eine Lichtaustrittsfläche (43) eines Glasfaserbündels oder eine aus Glasfasern gespeiste Übergabe-Optik ist.

6. Einrichtung nach mindestens einem der voranstehenden Ansprüche, **dadurch gekennzeichnet, daß** die Lichtquelle (12) relativ zur Optik (13) schwenkbar und/oder verdrehbar ist.

7. Einrichtung nach Anspruch 6, **dadurch gekennzeichnet, daß** die Lichtquelle (12) nahe einer sphärischen Oberfläche einer Aufnahme (17) angeordnet und mit dieser schwenkbar und/oder verdrehbar ist.

8. Einrichtung nach Anspruch 7, **dadurch gekennzeichnet, daß** die Aufnahme (17) eine Kugel mit einer insbesondere mittigen Bohrung (18) ist, in der die Lichtquelle (12) gehalten ist, wobei eine Zuleitung (29) für die Lichtquelle (12) durch die Bohrung (18) hindurchgeht, die Lichtquelle (12) über die Kugeloberfläche hervorsteht und die Aufnahme (17) im Gehäuse (11) durch Druck arretierbar ist.

9. Einrichtung nach Anspruch 7 oder 8, **dadurch gekennzeichnet, daß** die Aufnahme (17) eine Kugel ist, die im Inneren einer Hülse (14) an einem Innenrand (23) anliegt und von einer Innenhülse (16) - dem Innenrand gegenüberliegende - mit Druck beaufschlagbar ist.

10. Einrichtung nach mindestens einem der voranstehenden Ansprüche, **dadurch gekennzeichnet, daß** die Optik (13) an einem umlaufenden Rand (Einfassung 24) einer Hülse, insbesondere einer Außenhülse (15), gehalten ist, insbesondere derart, daß Licht - bezogen auf die Hülse - axial oder mit einem sich öffnenden Kegel in die Optik (12) eintritt und etwa radial aus der Optik austritt.

## Claims

1. A light-emitting device, in particular a lamp or lantern, with a housing (11), at least one light source (12) and at least one lens system (13) to direct the light radiated by the light source, it being the case that the lens system (13) has a ring-shaped or at least partially ring-shaped circumferential light emission surface (26) and that the light issues circumferentially from the lens system (13) as a narrow strip of light, i.e. limited in height, **characterized in that** the distance between light source (12) and lens system (13) is variable and that light source (12) and lens system (13) are assigned to different sleeves (15, 14) which are displaceable relative to each other in a common axial direction.

2. The device according to Claim 1, **characterized in that** the lens system (13) is a catadioptric lens, in particular with a single zone having a light admission surface (33), a reflection surface (34) and a light emission surface (26).

3. The device according to at least one of the previous Claims, **characterized in that** the light beams (35, 36) passing through the lens system (13) satisfy the eikonal condition.

4. The device according to at least one of the previous Claims, **characterized in that** the light source (12) is at least one LED.

5. The device according to at least one of the previous Claims, **characterized in that** the light source (12) is a light emission surface (43) of a glass fibre bundle or a transfer lens system fed by glass fibres.

6. The device according to at least one of the previous Claims, **characterized in that** the light source (12) is pivotable and/or rotatable relative to the lens system (13).

7. The device according to Claim 6, **characterized in that** the light source (12) is arranged near a spherical surface of a receptacle (17) and can be pivoted and/or rotated with the latter.

8. The device according to Claim 7, **characterized in that** the receptacle (17) is a ball with a in particular centred bore hole (18) in which the light source is seated (12), with a lead (29) for the light source (12) passing through the bore hole (18), the light source (12) projecting above the ball surface and it being possible to lock the receptacle (17) in the housing (11) by exerting pressure.

9. The device according to Claim 7 or 8, **characterized in that** the receptacle (17) is a ball which abuts an inner edge (23) inside a sleeve (14) and can be pressure-impacted by an inner sleeve (16) lying opposite the inner edge.

10. The device according to at least one of the previous Claims, **characterized in that** the lens system (13) is held on a circumferential edge (enclosure 24) of a sleeve, in particular of an outer sleeve (15), in particular in such a way that light - in terms of the sleeve - enters the lens system (12) axially or as an open cone and emerges from the lens system approximately radially.

## Revendications

1. Dispositif émetteur de lumière, en particulier luminaire ou lanterne (10), comprenant un boîtier (11), au moins une source lumineuse (12) et au moins une optique (13) pour la conduite de la lumière émise par la source lumineuse, l'optique (13) présentant une surface de sortie de lumière annulaire ou au moins en forme d'anneau partiel (26), et la lumière sortant de l'optique (13) sous forme de bande étroite, c'est-à-dire limitée en hauteur, **caractérisé par le fait que** la distance entre la source lumineuse (12) et l'optique (13) est modifiable et que la source lumineuse (12) et l'optique (13) sont agencées à des douilles différentes (15, 14) déplaçables l'une par rapport à l'autre selon leur direction axiale commune.

2. Dispositif selon la revendication 1, **caractérisé par le fait que** l'optique (13) est une lentille catadioptrique, en particulier qui comporte une zone unique présentant une surface d'entrée de lumière (33), une surface réfléchissante (34) et une surface de sortie de lumière (26).

3. Dispositif selon au moins une des revendications précédentes, **caractérisé par le fait que** les rayons lumineux (35, 36) qui traversent l'optique (13) satisfont à la condition éiconale.

4. Dispositif selon au moins une des revendications précédentes, **caractérisé par le fait que** la source lumineuse (12) est au moins une diode électroluminescence.

5. Dispositif selon au moins une des revendications précédentes, **caractérisé par le fait que** la source lumineuse (12) est une surface de sortie de lumière (43) d'un faisceau de fibres de verre ou une optique de transfert alimentée par des fibres de verre.

6. Dispositif selon au moins une des revendications précédentes, **caractérisé par le fait que** la source lumineuse (12) peut être pivotée et/ou mise en rotation par rapport à l'optique (13).

7. Dispositif selon la revendication 6, **caractérisé par le fait que** la source lumineuse (12) est agencée près d'une surface sphérique d'un logement (17) et peut être pivotée et/ou mise en rotation avec celui-ci.

8. Dispositif selon la revendication 7, **caractérisé par le fait que** le logement (17) est une sphère pourvue d'un trou en particulier centré (18) dans lequel est montée la source lumineuse (12), une conduite (29) d'amenée de la source lumineuse (12) traversant le trou (18), la source lumineuse (12) dépassant de la surface de la sphère et le logement (17) pouvant être bloqué dans le boîtier (11) par pression.

9. Dispositif selon l'une des revendications 7 et 8, **caractérisé par le fait que** le logement (17) est une sphère qui s'appuie à l'intérieur d'une douille (14) sur un bord intérieur (23) et peut être soumise à une pression par une douille intérieure (16) (opposée au bord intérieur).

10. Dispositif selon au moins une des revendications précédentes, **caractérisé par le fait que** l'optique (13) est montée sur un bord périphérique (monture 24) d'une douille, en particulier d'une douille extérieure (15), en particulier de façon telle que la lumière, relativement à la douille, entre dans l'optique (12) axialement ou par un cône s'ouvrant et sorte à peu près radialement de l'optique.
